# EUROPEAN PATENT APPLICATION

(11) **EP 0 531 601 A1**
(43) Date of publication of application: **17.03.1993**
(21) Application number: 91830368.6
(22) Date of filing: 09.09.1991
(51) Int. Cl.: H01H 71/12

(54) **An automatic circuit breaker for protecting multi-phase electric circuits**

(71) Applicant: BTICINO S.P.A., I-20122 Milano (IT)
(72) Inventor: Rossetti, Gianpaolo, I-26100 Cremona (IT)
(74) Representative: Maggioni, Claudio

(57) **Abstract**

An automatic circuit breaker (1) for multi-phase circuits is provided with an inductive current sensor, such as a transformer (6a,6b,6c) associated with each phase (a,b,c) to generate a first electric signal whose strength is dependent on a corresponding phase current, a controller device such as a rectifier (10) which is supplied said first signals and operative to output a second electric signal being proportional to the combined RMS values of the input signals, and a single protection, preferably of the magnetothermal type (12) responsive to the second signal to drive the breaker open on predetermined current threshold values being exceeded in one or more of the circuit phases.

## Description

This invention relates to an automatic circuit breaker for protecting multi-phase electric circuits, comprising a normally closed switch for each phase and protection means for opening at least one of the phase switches on predetermined current threshold values being exceeded in a respective phase.

Automatic circuit breakers having the above-mentioned features are extensively employed to protect electric systems from short-circuit or persistent overload currents.

Such automatic circuit breakers, as used with multi-phase electric circuits, comprise a switch and a magnetothermal protection connected serially in each phase. The magnetothermal protection comprises, according to a conventional construction layout, a bimetallic strip type of thermal protection, against persistent overloading, and an electromagnetic peak current protection.

One drawback of known automatic circuit breakers is that they require as many magnetothermal protections as there are phases in the protected circuit, which involves complications in construction, assembly and maintenance, as well as comparatively high manufacturing costs.

A second drawback is that, owing to such magnetothermal protections having the phase current passed therethrough, automatic circuit breakers designed for different current ratings will require different dimension protections.

The underlying technical problem of this invention is to provide an automatic circuit breaker for multi-phase electric circuits, which has a simplified construction over the above-mentioned prior art and allows, for the same amount of electric protection, simplifications in construction and assembly, and significantly lower manufacturing costs.

This problem is solved by an automatic circuit breaker as specified in the introductory part being characterized in that it comprises:
current sensing means associated with said phases and operative to generate for each phase, a first electric signal whose strength is dependent on a respective phase current; and
controller means being input said first signals and operative to output a second electric signal which is proportional to the combined RMS values of the first input signals;
said protection means being supplied said second signal to simultaneously drive all said switches to open on said current threshold values being exceeded.

The invention will be now described in greater detail with reference to a preferred embodiment thereof, shown by way of example and not of limitation in the accompanying drawings, in which:

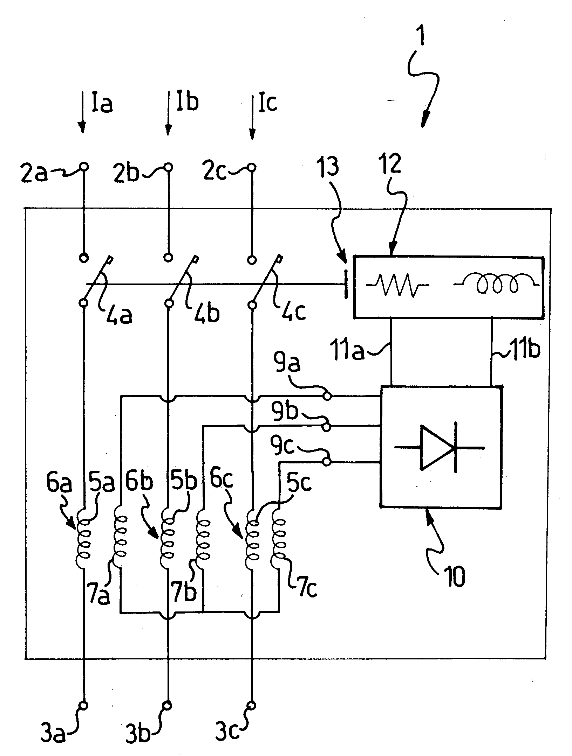

Figure 1 shows a wiring diagram of an automatic circuit breaker for protecting a three-phase circuit.

In the drawing figure, generally shown at 1 is an automatic circuit breaker according to the invention. This circuit breaker 1 has three input terminals 2a, 2b, 2c and three output terminals 3a, 3b, 3c. Three pairs 2a-3a, 2b-3b, 2c-3c of such terminals are associated with respective phases a, b, c of a three-phase circuit (not shown in the drawing) in which the automatic circuit breaker 1 is connected. Connected across the terminals of each pair, 2a-3a, 2b-3b, 2c-3c, is a primary circuit 5a, 5b, 5c of a respective transformer 6a, 6b, 6c. In series with that link is a respective phase switch 4a, 4b, 4c. These switches, 4a, 4b, 4c, are normally closed, thereby providing electric continuity for their respective phases.

The transformers 6a, 6b, 6c are each provided with a secondary circuit 7a, 7b, 7c inductively connected to a respective primary circuit and on which a first electric signal is induced as the respective primaries 5a, 5b, 5c are passed through a sinusoidal alternating current Ia, Ib, Ic. Thus, the transformers 6a, 6b, 6c will function as sensors for the phase currents Ia, Ib, Ic.

The drawing figure shows the secondaries wye connected, but they could be connected otherwise, e.g. be delta connected. The secondaries 7a, 7b, 7c, moreover, are connected to respective input terminals 9a, 9b, 9c of controller means 10. Such controller means 10 comprise a conventional rectifier, e.g. of the bridge type, which when input the three first signals, will generate on output conductors 11a, 11b a second signal which is a linear combination of the RMS values of the first signals.

It may be appropriate to recall, for quicker reference, that the RMS value of a sinusoidal alternating current basically corresponds to the value of a direct current which, in flowing through a resistance, produces an amount of heat per unit time equal to that to be expected from the sinusoidal alternating current when flowing through that same resistance, which is expressed mathematically by the square root of the mean value of the sinusoidal alternating current squared.

The second output signal from the rectifier 10 is supplied to a magnetothermal protection 12 which is connected to the output conductors 11a, 11b and in turn operates, through a conventional linkage schematically indicated at 13, the switches 4a, 4b, 4c to drive them into the open state.

Assuming a normal condition of operation, the phase switches 4a, 4b, 4c would be set closed, thereby providing electric continuity across the terminal pairs 2a-3a, 2b-3b and 2c-3c, respectively. When a phase current Ia, Ib, Ic flows across the terminals of each pair, a corresponding current of proportional intensity is induced through the secondary circuits 7a, 7b, 7c of the transformers 6a, 6b, 6c. If any of currents Ia, Ib, Ic reaches a predetermined threshold value (being an overload or short-circuit current) whereat operation of the automatic circuit breaker 1 is required, then the corresponding current induced on the secondary (the first signal) will attain a corresponding threshold value; preferably below the value of the relevant phase current. Through the rectifier 10, a linear combination is obtained of RMS values for the three first signals induced by the three phase currents Ia, Ib, Ic to output a single second signal from tile rectifier. This second signal is subject to strength variations which are tied to strength variations of one or more of the first input signals to the rectifier 10, and consequently, dependent on the values of the phase currents Ia, Ib, Ic flowing through the primary circuits 5a, 5b, 5c of transformers 6a, 6b, 6c.

On said second signal reaching and exceeding a threshold value being a function of the phase current threshold values, as previously explained, switches 4a, 4b, 4c are driven to open by the action of the magnetothermal protection 12. The method and means governing this action will not be discussed herein because quite conventional.

It should be further noted that, by suitably dimensioning the transformers 6a, 6b, 6c, such as by changing the number of turns in the secondaries 7a, 7b, 7c, the same magnetothermal protection 12 and same rectifier 10 can be used in the construction of automatic circuit breakers designed for different current ratings. In fact, the secondaries 5a, 5b, 5c of transformers 6a, 6b, 6c can be dimensioned such that, for different threshold values of the phase currents Ia, Ib, Ic, first signals with identical values are obtained at the corresponding secondaries 7a, 7b, 7c.

This enables a high degree of standardization to be achieved in the components of automatic circuit breakers designed for different current ratings.

Furthermore, with a single magnetothermal protection 12 being adequate to control the automatic circuit breaker 1, construction and assembly of this automatic circuit breaker can be simplified to advantage and its overall cost reduced.

## Claims

1. An automatic circuit breaker for protecting multi-phase electric circuits, comprising a normally closed switch (4a,4b,4c) for each phase and protection means (12) for opening at least one of the phase switches on predetermined current threshold values being exceeded in a respective phase, characterized in that it comprises:
current sensing means (6a,6b,6c) associated with said phases and operative to generate, for each phase, a first electric signal whose strength is dependent on a respective phase current; and
controller means (10) being input said first signals and operative to output a second electric signal which is proportional to the combined RMS values of the first input signals;
said protection means (12) being supplied said second signal to simultaneously drive all said phase switches (4a,4b,4c) to open on said current threshold values being, exceeded.

2. An automatic circuit breaker according to Claim 1, wherein a current sensor (6a,6b,6c) for each phase (a,b,c) is associated inductively with a corresponding phase.

3. An automatic circuit breaker according to Claim 2, wherein said current sensors comprise a current transformer (6a,6b,6c) for each phase (a,b,c) having its primary (5a,5b,5c) in series on its corresponding phase (a,b,c) and its secondary circuit (7a,7b,7c) closed across said controller means (10).

4. An automatic circuit breaker according to claims 1 to 3, wherein said controller means (10) comprise a current rectifier.

5. An automatic circuit breaker according to Claim 4, wherein the rectifier is of the bridge type.

6. An automatic circuit breaker according to any of the preceding claims, wherein said protection means comprise a magnetothermal protection (12).
